Europäisches Patentamt

(19) European Patent Office

Office européen des brevets

(11) Numéro de publication: **0 001 528**
**B1**

(12) **FASCICULE DE BREVET EUROPEEN**

(21) Numéro de dépôt: **78400119.0**

(22) Date de dépôt: **29.09.78**

(51) Int. Cl.³: **C 21 B 7/00,**
**F 16 L 3/08**

(54) Dispositif de support d'une descente de vent de haut-fourneau

(30) Priorité: **30.09.77 FR 7729508**

(43) Date de publication de la demande:
**18.04.79 Bulletin 79/08**

(45) Mention de la délivrance du brevet:
**03.09.80 Bulletin 80/18**

(84) Etats contractants désignés:
**DE NL**

(56) Documents cités:
**DE - A - 1 937 139**
**US - A - 1 847 835**

(73) Titulaire: **Société dite: Union Siderurgique du Nord**
**et de l'est de la France par abréviation "Usinor"**
**14, Rue d'Athènes**
**F - 75426 Paris, Cedex 09 (FR)**

(72) Inventeur: **Voituriez, Henry**
**444, Rue de Douvre**
**Malo Les Bains F - 59240 Dunkerque (FR)**
**Aymard, René**
**31, Rue Cortot Résidence Lafayette**
**F - 59760 Grande Synthe (FR)**

(74) Mandataire: **Lavoix, Jean**
**c/o Cabinet Lavoix 2, Place D'Estienne D'Orves**
**F - 75441 Paris Cedex 09 (FR)**

Dispositif de support d'une descente de vent de haut-fourneau

La présente invention concerne les installations permettant d'alimenter en air chaud ou en vent chaud les haut-fourneaux.

De telles installations comprennent habituellement des soufflantes alimentant en air chaud une conduite circulaire entourant le haut-fourneau et reliée aux tuyères par un certain nombre de conduites appelées descentes de vent. Ces descentes de vent sont réalisées en plusieurs tronçons fixés les uns aux autres par des moyens convenables et certains de ces éléments sont suspendus au blindage du haut-fourneau par des tirants ou des tendeurs. Or, cette disposition présente un certain nombre d'inconvénients. C'est ainsi que lorsque les éléments inférieurs des conduites de descent de vent doivent être remontés après qu'un démontage pour réparation ou remplacement ait été nécessaire, il est souvent difficile de positionner ces éléments de façon précise, ce qui est essentiel pour que l'élément inférieur extrême appelé busillon vienne s'ajuster dans le talon de la tuyère. Ce manque de précision entraîne en général une perte de temps importante et peut être dangereux puisque le personnel devant effectuer ces opérations travaille dans des conditions difficiles.

Le but de cette invention est de fournir un dispositif de support ou de suspension d'un élément ou tronçon de conduite de descent de vent par rapport au blindage d'un haut-fourneau, qui ne présente pas ces incon-vénients et qui permette d'assurer dans de bonnes conditions et avec une grande précision le montage et le démontage des éléments ou tronçons situés en aval de cet élément.

Suivant l'invention, il est prévu un ensemble de support fixé rigidement au blindage du haut-fourneau et délimitant au moins une glissière à peu près horizontale de support et de guidage pour un organe complémentaire porté par un élément de la descente de vent, des moyens étant par ailleurs prévus pour bloquer horizontalement ledit élément de la descent de vent par rapport à l'ensemble de support lors d'un arrêt de l'installation et du démontage d'un autre élément de cette descente de vent.

Suivant un mode de réalisation, l'ensemble de support comprend deux paires de glissières parallèles entre lesquelles est guidé ledit organe porté par l'élément de descent de vent, et ce support est de préférence réalisé en deux parties, l'une fixée sur le blindage, l'autre fixée sur le première et délimitant les glissières, la partie fixée sur le blindage comportant suivant une autre caractéristique une butée réglable destinée à absorber des efforts verticaux engendrés au cours du fonctionnement de l'installation.

Cette dernière va être décrite plus en détail ci-dessous en se référant au dessin annexé donné à titre d'exemple et sur lequel:

— la Fig. 1 est une vue en élévation latérale et en coupe verticale partielle d'une partie d'une installation suivant l'invention;

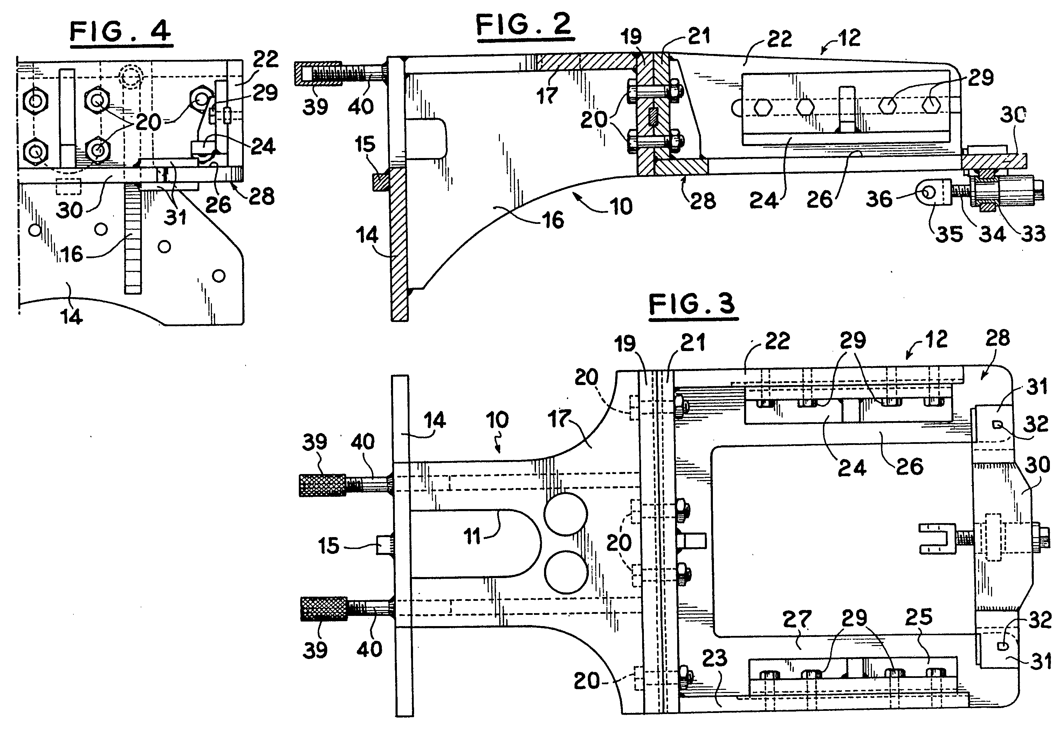

— la Fig. 2 est une vue en coupe du support seul;

— la Fig. 3 est une vue en plan de ce même support; et

— la Fig. 4 est une vue partielle en élévation latérale du support.

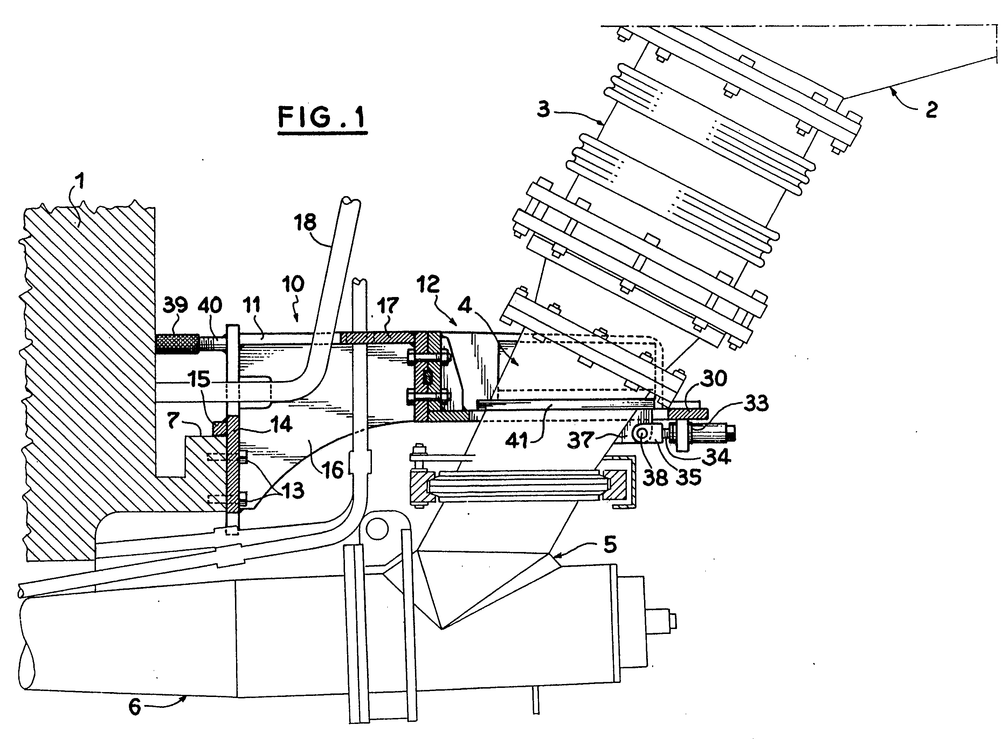

On voit sur la Fig. 1 une partie d'une installation d'alimentation en air chaud ou en vent chaud d'un haut-fourneau dont le blindage est désigné par la référence 1. L'installation comprend un circulaire 2 et une descente de vent 3 en plusieurs éléments ou tronçons et en particulier un élément conique inférieur 4 sur lequel est fixée une pièce intermédiare 5 en forme de T ou dauphin, portant elle-même un busillon 6 destiné à être raccordé à une tuyère.

Suivant l'invention, un dispositif de support 10 réalisé ici en deux parties principales 11, 12, assure le mainien et le guidage de l'élément conique inférieur 4 de la descent de vent. Le dispositif de support comprend un support proprement dit 11 fixé sur le blindage du haut-fourneau, par exemple par des boulons 13. Ce support comprend principalement un paroi arrière 14, renforcée par au moins une ferrure 15 en appui sur une surface horizontale 7 du blindage, deux ailes latérales 16, une paroi supérieure 17 découpée pour permettre le passage de conduits ou tuyaux tels que 18, et une paroi frontale 19. Sur cette dernière est fixé, par des boulons 20, le sous-ensemble 12 ayant en plan une forme de U (Fig. 3) et comportant des parois verticales 21, 22, 23, dont l'une 21 permet la fixation sur la face frontale 19 du support et dont les deux autres 22, 23. latérales, supportent des éléments supérieurs de glissière 24, 25. Les éléments inférieurs de ces glissières sont constitués par les surfaces horizontales supérieures 26, 27 d'une paroi inférieure 28 du sous-ensemble 12, soudée aux parois verticales 21, 22, 23. Cette paroi ou plaque horizontale a une forme en U pour permettre le passage du cône 4. Les éléments supérieurs 24, 25 des glissières ont une section en L et sont fixés au moyen de boulons 29 sur les ailes verticales du sous-ensemble 12. Le dispositif est complété par une traverse 30 qui est guidée par ses deux extrémités en U, 31, sur les deux ailes de la plaque 28 et fixée sur cette plaque par deux goupilles 32 ou autre moyen convenable. La traverse 30 porte à sa partie inférieure un mécanisme simple permettant de bloquer en position le cône inférieur. Ce mécanisme comprend un écrou 33 fixe en translation mais monté libre à rotation, et une vis 34 pouvant se déplacer en translation, et terminée par une chape 35 dont les deux branches opposées sont percées d'orifices coaxiaux 36. Cette chape peut venir en prise sur une ferrure 37 portée par le cône inférieur 4 et munie d'un orifice (non visible sur le dessin). La chape 35 et la ferrure 37 peuvent être rendues solidaires au moyen d'une goupille 38 que l'on engage dans les orifices 36.

Par ailleurs, au moins une butée réglable 39 constituée par un chapeau moleté, vissé sur une tige filetée 40, est prévue à la partie arriére du support 11. Cette butée est destinée à reporter su` ie blindage des efforts verticaux, dirigés vers le haut, engendrés en fonctionnement sous l'eifet des variations de température. Sur le cône 4 est soudée ou fixée par tout autre moyen une plaque 41, agencée de façon à être reçue entre les éléments de glissières 24, 26 et 25, 27, respectivement.

Le fonctionnement de l'ensemble que l'on vient de décrire est le suivant: lorsqu'on souhaite démonter la partie inférieure de la descent de vent, à savoir le busillon 6 et la pièce 5 en forme de T, on amène la chape 35 au niveau de la ferrure 37 portée par le cône inférieur et l'on bloque ce dernier par rapport au support au moyen de la goupille 38. Le cône inférieur est alors positionné à la fois verticalement par les glissières 24, 25, 26, 27 et horizontalement par le mécanisme de blocage 35, 37, 38. La partie inférieure 5, 6 de la descent de vent peut alors être démontée.

Lors du remontage ultérieur on est assuré que le plan de joint entre le cône inférieur 4 et le dauphin 5 est parfaitement déterminé du fait du montage du cône dans les glissières, contrairement à ce qui se produit lorsque ce même cône est supporté par des tirants qui ne peuvent empêcher un mouvement de basculement de cette pièce, notamment lors de son refroidissement. Ce plan de joint étant parfaitement défini, le busillon s'adapte de façon précise et sans réglage particulier dans le talon de la tuyère. En fonctionnement, la chape 35 est dégagée de la ferrure 37 de façon à autoriser des débattements de la descente de vent, lors des dilatations et déformations se produisant sous l'effet de l'élévation de température.

Dans un même esprit, les moyens de butée réglables 39, 40 prévus suivant une caractéristique de l'invention sont importants car ils permettent de réaliser un appui précis et efficace de la partie supérieure du support contre le blindage, permettant de résister sans dommage aux efforts verticaux qui peuvent être engendrés en utilisation par les élévations de température importantes auxquelles sont soumis la descente de vent et son support.

**Revendications**

1. Dispositif de support d'un élément ou tronçon d'une descente de vent de haut-fourneau, caractérisé en ce qu'il comprend un ensemble de support (11, 12) fixé rigidement au blindage (1) du haut-fourneau et délimitant au moins une glissière à peu près horizontale de support et de guidage pour un organe complémentaire (41) porté par un élément (4) de la descente de vent, des moyens (35, 37, 38) étant par ailleurs prévus pour bloquer horizontalement ledit élément (4) de la descent de vent par rapport à l'ensemble de support lors d'un arrêt de l'installation et du démontage d'un autre élément de cette descente de vent.

2. Dispositif suivant la revendication 1, caractérisé en ce que l'ensemble de support comprend deux paires de glissières parallèles (24, 26; 25, 27) entre lesquelles est guidé ledit organe (41) porté par l'élément (4) de la descente de vent.

3. Dispositif suivant l'une quelconque des revendications 1 et 2, caractérisé en ce que le support (11, 12) comporte une partie ayant une forme générale en U, possédant deux ailes entre lesquelles peut passer l'élément (4) de la descente de vent et qui délimitent lesdites glissières.

4. Dispositif suivant la revendication 3, caractérisé en ce que les glissières comportent des surfaces inférieures délimitées directement par le support et des surfaces supérieures délimitées par des éléments (24, 25) rapportés et fixés sur ce support (12).

5. Dispositif suivant l'une quelconque des revendications 1 à 4, caractérisé en ce que le support (11, 12) est complété par une traverse (30) amovible, fixée sur l'extrémité du support la plus éloignée du blindage du haut-fourneau.

6. Dispositif suivant la revendication 1, caractérisé en ce que lesdits moyens peur bloquer horizontalement ledit élément (4) de la descente de vent comprennent un organe d'accrochage (35, 38) rétractable fixé sur l'ensemble de support (11, 12) pouvant venir en prise sur un ferrure (37) porté par l'élément (4) de la descente de vent.

7. Dispositif suivant l'une quelconque des revendications 1 à 6, caractérisé en ce que le support est réalisé en deux parties (11, 12), l'une (11) fixée sur le blindage (1), l'autre (12) fixée sur la première et délimitant au moins en partie les glissières.

8. Dispositif suivant l'une quelconque des revendications 1 à 7, caractérisé en ce que le support (11) comporte une butée réglable (39, 40) en appui contre le blindage du haut-fourneau et destinée à absorber des efforts verticaux engendrés au cours du fonctionnement de l'installation.

9. Dispositif suivant l'une quelconque des revendications 1 à 8, caractérisé en ce que le support (11) comporte au moins une ferrure (15) venant en appui sur une horizontale (7) du blindage (1) du haut-fourneau.

**Claims**

1. A device for supporting an element or section of a blast downpipe of a blast furnace, characterized in that it comprises a support unit (11, 12) rigidly fixed to the casing (1) of the blast furnace and defining at least one support and guide slideway for a complementary member (41) carried by an element (4) of the blast downpipe, means (35, 37, 38) being provided for locking said element (4) of the blast downpipe horizontally relative to the support unit when the apparatus is stopped and another element of said blast downpipe is being disassembled.

2. A device as claimed in claim 1, characterized in that the support unit comprises two pairs of slideways (24, 26; 25, 27) which are parallel to each other and between which said member (41) carried by the element (4) of the blast downpipe is guided.

3. A device as claimed in claim 1 or 2, wherein the support unit (11, 12) has a part having the general shape of a U, defining two wings between which the element (4) of the blast downpipe is capable of passing, the slideways being defined along said two wings.

4. A device as claimed in claim 3, wherein the slideways comprise lower surfaces directly defined by the support unit and upper surfaces defined by members (24, 25) which are combined with and fixed to said support unit (12).

5. A device as claimed in any one of the claims 1—4, wherein said support unit (11, 12) is completed by a detachable cross-member (30) fixed to the end of the support unit which is remote from the casing of the blast furnace.

6. A device as claimed in claim 1, wherein said means for locking horizontally said element (4) of the blast downpipe comprise a hooking means (35, 38) which is withdrawable, fixed on the support unit (11, 12) and is capable of engaging a bracket (37) carried by the element (4) of the blast downpipe.

7. A device as claimed in any one of the claims 1—6, wherein the support unit is constructed of two parts (11, 12) one of which (11) is fixed to the casing (1) of the blast furnace and the other (12) is fixed to the first mentioned part and defines the slideways.

8. A device as claimed in any one of the claims 1—7, wherein the support (11) comprises an adjustable abutment (39, 40) engaging the casing (1) of the blast furnace and adapted to absorb vertical forces produced in the course of the operation of the apparatus.

9. A device as claimed in any one of the claims 1—8, wherein the support (11) comprises at least one bracket (15) which bears against a horizontal face (7) of the casing (1) of the blast furnace.

**Patentansprüche**

1. Trägervorrichtung für ein Element bzw. Teilstück eines Windfalls eines Hochofens, dadurch gekennzeichnet, daß sie eine starr am Mantel (1) des Hochofens befestigte Trägereinheit (11, 12) umfaßt, welche wenigstens eine im wesentlichen horizontale Gleitführung zum Abstützen und Führen eines auf einem Element (4) des Windfalls sitzenden komplementären Teiles (41) bestimmt, und daß ferner eine Einrichtung (35, 37, 38) zur horizontalen Festlegung des Elements (4) des Windfalls bezüglich der Trägereinheit bei Stillegung der Anlage und Abnahme eines anderen Elements des Windfalls vorgesehen ist.

2. Vorrichtung nach Anspruch 1, dadurch gekennzeichnet, daß die Trägereinheit zwei Paare paralleler Gleitführungen (24, 26; 25, 27) aufweist, zwischen denen das auf dem Element (4) des Windfalls sitzende Teil (41) geführt ist.

3. Vorrichtung nach einem der Ansprüche 1 und 2, dadurch gekennzeichnet, daß der Träger (11, 12) ein allgemein U-förmiges Teil umfaßt, welches zwei Schenkel aufweist, zwischen denen das Element (4) des Windfalls durchtreten kann und die die Gleitführungen bestimmen.

4. Vorrichtung nach Anspruch 3, dadurch gekennzeichnet, daß die Gleitführungen untere Flächen aufweisen, die direkt durch den Träger bestimmt sind, und obere Flächen, die durch am Träger (12) angesetzte und befestigte Elemente (24, 25) bestimmt sind.

5. Vorrichtung nach einem der Ansprüche 1 bis 4, dadurch gekennzeichnet, daß der Träger (11, 12) ferner ein lösbares Querstück (30) aufweist, das am vom Mantel des Hochofens entfernten Ende des Trägers befestigt ist.

6. Vorrichtung nach Anspruch 1, dadurch gekennzeichnet, daß die Einrichtung zur horizontalen Festlegung des Elements (4) des Windfalls ein an der Trägereinheit (11, 12) befestigtes zurückziehbares Ankuppelteil (35, 38) aufweist, welches mit einem Beschlag (37) am Element (4) des Windfalls in Eingriff bringbar ist.

7. Vorrichtung nach einem der Ansprüche 1 bis 6, dadurch gekennzeichnet, daß der Träger aus zwei Teilen (11, 12) aufgebaut ist, von denen das eine (11) am Mantel (1) und das zweite (12) am ersten befestigt ist und wenigstens zum Teil die Gleitführungen bestimmt.

8. Vorrichtung nach einem der Ansprüche 1 bis 7, dadurch gekennzeichnet, daß der Träger (11) einen verstellbaren Anschlag (39, 40) aufweist, welcher gegen den Mantel des Hochofens zur Anlage kommt und zur Aufnahme von beim Betrieb der Anlage auftretenden Vertikalkräften dient.

9. Vorrichtung nach einem der Ansprüche 1 bis 8, dadurch gekennzeichnet, daß der Träger (11) wenigstens einen Beschlag (15) aufweist, der auf einer horizontalen Fläche (7) des Mantels (1) des Hochofens zur Anlage kommt.

FIG.1

FIG. 4

FIG. 2

FIG. 3

0001528